(19) Europäisches Patentamt
European Patent Office
Office européen des brevets

(11) Publication number: **0 324 998 B1**

(12) **EUROPEAN PATENT SPECIFICATION**

(45) Date of publication of patent specification: **07.06.95** (51) Int. Cl.[6]: **C08G 67/02**

(21) Application number: **88202922.6**

(22) Date of filing: **16.12.88**

The file contains technical information submitted after the application was filed and not included in this specification

# (54) Polymeric polyketone derivatives.

(30) Priority: **29.12.87 US 138768**
**29.12.87 US 138779**

(43) Date of publication of application:
**26.07.89 Bulletin 89/30**

(45) Publication of the grant of the patent:
**07.06.95 Bulletin 95/23**

(84) Designated Contracting States:
**AT BE CH DE ES FR GB IT LI NL SE**

(56) References cited:
**EP-A- 0 118 312**
**GB-A- 603 481**
**US-A- 3 979 373**
**US-A- 3 979 374**

**"Chemical Reactions of Polymers", E.M.Fettes, Interscience Publishers (1964), p.73-75**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Wong, Pui Kwan**
**Gerrit van der Veenstraat 73**
**NL-1077 DS Amsterdam (NL)**

EP 0 324 998 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polymeric polyketone derivatives, in particular to polymeric compounds obtainable by reacting a polyketone with a vicinal diol and/or a primary amine, and to a process for their preparation.

The class of polymers of carbon monoxide and olefin(s) has been known for a number of years.

More recently, the class of linear alternating polymers of carbon monoxide and at least one ethylenically unsaturated compound, also known as polyketones has become of greater interest because of the availability of more efficient catalysts for their preparation. A more recent general process for the production of such polymers is illustrated by EP-A 121,965, 181,014 and 222,454. These processes typically involve a catalyst composition formed from a compound of the Group VIII metals palladium, cobalt or nickel, the anion of a non-hydrohalogenic acid having a pKa less than 6, preferably less than 2, and a bidentate ligand of phosphorus, arsenic or antimony.

The polyketone polymers are known to be premium thermoplastics having utility in a variety of applications. However, because of the presence within the polymer of carbonyl functional groups, it is possible to chemically modify the polymer by reaction at or through the carbonyl group to produce modified polymers of modified properties. For example, reduction of the carbonyl function leads to the production of polyols.

A polymeric pyrrole derivative of the copolymer of carbon monoxide and ethylene is shown in US-3,979,374 wherein a variety of aliphatic or arylaliphatic amines (of formula $RNH_2$) is reacted in a hydroxylic solvent with the copolymer to produce polymers having groups of the structures

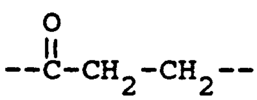

and

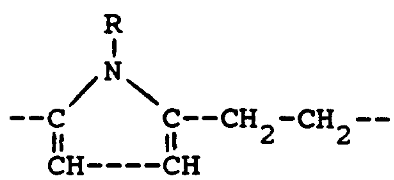

in ratios where the carbonyl moiety was present in considerable excess over the pyrrole moiety. In this process, a low conversion to pyrrole derivatives was desired and indeed the conversion of carbonyl groups was less than 50%, more often less than 25%. Its stated objective was merely to modify the polyketone properties and thereby achieve improved processability.

It is also possible to introduce other cyclic structures into or onto the polymer chain. US-3,979,373 shows the introduction of furan linkages into the polymer chain by acid-catalyzed dehydration of a carbon monoxide/ethylene copolymer. US-3,979,367 shows the production of cyclic thioketal groups by reaction of the copolymer and dithiol compounds. In both cases, however, the degree of formation of cyclic structures was low, generally less than about 25%. While the presence of cyclic structures in these polymers served to modify the properties of the carbon monoxide/ethene copolymers, it would be of advantage to provide for further modification through the procession of more extensive cyclic structures, thereby providing utilities beyond those available from the polyketone or the slightly modified polyketone.

It has now been found that such derivatives can be made in surprisingly high molecular purity, that is, with relatively few of the carbonyl groups remaining unconverted. This is achieved by reacting at least two thirds of the ketone groups in a linear alternating polymer of carbon monoxide and an olefinically unsaturated compound of repeating formula $-CO-CH_2-CHZ-$ with an amino compound of formula $H_2NR$ and/or a 1,2-dihydroxyalkane of formula

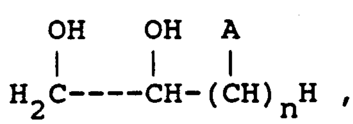

where A, R, Z and n have the meanings defined hereafter.

Accordingly, the invention relates to novel polymeric polyketone derivatives, characterized by random distribution along the polymer chain of a units of

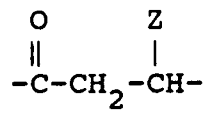

,

b units of

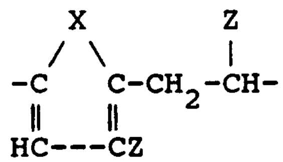

,

c units of

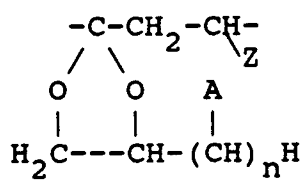

,

and being free of units of

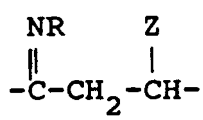

,

in which formulae:
A stands for H or OH;
R stands for a group of formula

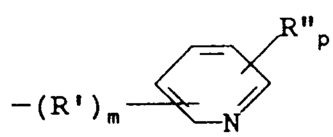

in which R' is a hydrocarbyl bridging group of up to 10 carbon atoms, m is 0 or 1, p is 0, 1 or 2, and each R'' is independently a hydrocarbyl group of up to 10 carbon atoms;
X represents O or NR;
Z represents H or a $C_{1-12}$ alkyl, aryl or alkaryl group;
n is an integer from 0 to 4 inclusive;
a and c are integers ≧ 0, and
b is an integer > 0;
with the provisos, that no more than one A can be OH; that if X stands for an oxygen atom, the ratio a : (a + b + c) < 0.33 and the ratio c : b ≧ 2; and that if X stands for the group NR, c = 0 and a : b ≦ 0.2.

The polymeric precursor of the polymers of the invention is a linear alternating copolymer of carbon monoxide and an olefinically unsaturated compound represented by the repeating formula

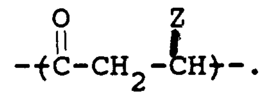

The end groups or "caps" of the polymer depend on what materials are present during the production of the polymer and whether and how the polymer has been purified. However, the precise nature of the end groups is of little significance so far as the overall properties of the polymer are concerned so that the polymer is fairly represented by the polymer chain as depicted above.

Especially preferred are the copolymers wherein Z represents hydrogen, methyl or phenyl, in particular hydrogen.

Of particular interest are the polymers of the above structure having a molecular weight of from about 1,000 to about 200,000 but more particularly having a molecular weight of from 10,000 to 50,000. The physical properties of these polymers will vary somewhat as does the molecular weight but the polymers are crystalline and are characterized by a melting point in the order of 260 °C.

The derivatives are characterized, in particular, by their high molecular purity. This is expressed by the ratio of $a:(a+b+c+d)$, which is less than one third according to the invention, preferably less than 0.05, i.e. less than 5% of the carbonyl groups being unconverted.

In one embodiment, the derivatives are exclusively based on oxygen, that is, X represents an oxygen atom. Accordingly, $d=0$ and the ratio $c:b \geqq 2$, preferably $\geqq 8$. Also, the ratio $a:(a+b+c+d)$ is preferably $<$ 0.02 for derivatives wherein X stands for oxygen.

The polyhydric alcohol precursor of the polydioxolane polymers of the invention is a 1,2-dihydroxyalkane of up to 6 carbon atoms and up to 1 additional hydroxyl group. Such polyhydric alcohols are represented by the formula

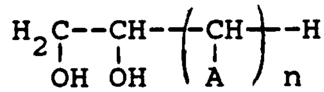

wherein A represents hydrogen or hydroxyl, n is an integer from 0 to 4 inclusive and the molecule contains no more than a single A-hydroxyl group. Suitable polyhydric alcohols are ethylene glycol, glycerol, 1,2,6-hexanetriol, 1,2,4-hexanetriol, 1,2,5-pentanetriol and 1,2-pentanediol. Ethylene glycol and glycerine form a preferred class of polyhydric alcohols and particularly preferred is ethylene glycol. Mixtures of such polyhydric alcohols are also suitably employed.

In another embodiment, the derivatives are exclusively based on nitrogen, that is, X represents a $>$ NR group, and $c=0$. Such compounds are obtainable by the amination of the carbonyl group, yielding a mixture of the imine derivative and the pyrrole derivative generally. By selecting the reaction conditions and/or the reactants, derivatives containing the imine or the pyrrole moieties predominantly, may be obtained. Thus the amination of a polyketone with a primary alkyl amine, will yield a 70-30 pyrrole-imine mixture approximately, which can be further reduced to a pyrrole-amine mixture.

However, according to a embodiment of the present invention, the derivative is substantially free of the imine moiety, and relates to a compound in which X represents NR, $d=0$, the ratio of $a:b \leqq 0.2$ and R stands for a group of formula

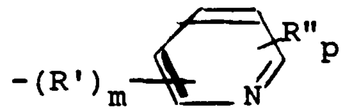

in which R′ is a hydrocarbyl bridging group of up to 10 carbon atoms, m is 0 or 1, p is 0, 1 or 2, and each R″ is independently a hydrocarbyl group of up to 10 carbon atoms.

Illustrative hydrocarbyl R′ bridging groups include alkarylene and arylene groups such as phenylene but preferred R′ bridging groups are alkylene and alkylidene groups such as methylene, ethylene, propylene, hexamethylene and decamethylene. Particularly preferred hydrocarbyl R′ bridging groups are lower alkylene of up to 4 carbon atoms, and especially preferred is methylene. Illustrative R″ groups include aryl and alkaryl groups such as phenyl and tolyl but preferred R″ groups are alkyl such as methyl, ethyl, propyl, hexyl, octyl and decyl. Particularly preferred hydrocarbyl R″ substituents are lower alkyl of up to 4 carbon

atoms, but best results are obtained when the aminopyridine or aminoalkylpyridine derivative is otherwise unsubstituted, i.e., the compound of the above formula wherein p = 0.

Suitable aminopyridines for use in the invention include, for example, 2-aminopyridine, 3-aminopyridine, 4-aminopyridine, 2-amino-4-picoline, 2-amino-3-picoline, 2-amino-6-picoline and 2-amino-4,6-dimethylpyridine. The preferred aminopyridine is 4-aminopyridine. Suitable aminoalkylpyridines for use in the invention include, for example, 2-aminomethylpyridine, 3-aminomethylpyridine, 4-aminomethylpyridine and 2-(2-aminoethyl)pyridine. The preferred aminoalkylpyridine is 4-aminomethylpyridine.

The invention also relates to a process for the preparation of polymeric polyketone derivatives. Such a process is characterized in that a linear alternating polymer of carbon monoxide and an olefinically unsaturated compound of repeating formula $-CO-CH_2-CHZ-$ is reacted with an amino compound of formula $H_2NR$ and/or a 1,2-dihydroxyalkane of formula

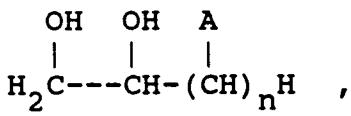

where A, R, Z and n have the meanings defined hereinbefore.

The reaction with the amine compound is suitably carried out in the presence of hydrogen and a hydrogenation catalyst such as nickel, rhodium, platinum, palladium and the like. Typically the imine, which is probably formed initially, is reduced to the corresponding amine by the hydrogen, but ring closure to a pyrrole moiety, because of the reaction between the amine and the adjacent carbonyl group, occurs as well, to some extent.

When reacting with an amino compound in which R represents an alkylpyridine or a pyridine group, it is preferred to contact the polyketone polymer with the amino compound in the presence of an aprotic liquid reaction diluent. It has been found in particular, that good yields are obtained when a linear alternating polymer of carbon monoxide and ethene is reacted with an amino(alkyl)pyridine of formula

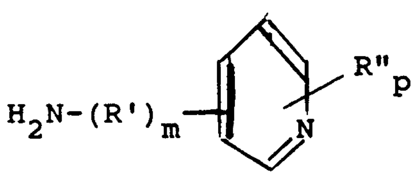

in an aprotic reaction diluent, where R′, R″, m and p have the meanings defined hereinbefore.

The amine or polyhydric alcohol is typically employed in molar excess. Although the molar character of a portion of a polymer is often difficult to determine, it would seem that one mole would react with two moles of carbonyl group present in the copolymer. Thus, molar ratios of amine or polyhydric alcohol to carbonyl group of from about 1:1 to about 20:1 are suitable with molar ratios of from 3:1 to 10:1 being preferred, and molar ratios of from 2:1 to 5:1 being most preferred.

Suitable reaction diluents are those in which the polyhydric alcohol and/or amine is soluble. They should not contain hydroxyl groups if the additional formation of oxygen-containing derivatives is to be avoided. Illustrative of such aprotic reaction diluents are hydrocarbon diluents including aliphatic hydrocarbons such as hexane and isooctane, aromatic hydrocarbons including benzene, toluene, xylene, and ethylbenzene; chlorinated hydrocarbon solvents such as chloroform, carbon tetrachloride and chlorobenzene; and ethers including dimethylether, diethyl ether and diisopropyl ether. Hydrocarbon or chlorinated hydrocarbon diluents are generally preferred over oxygenated diluents. Mixtures of such diluents are useful and particularly good results are obtained by the use of a mixture of toluene and chlorobenzene. Preferably the reaction is carried out in an aprotic reaction diluent selected from xylene, toluene and chlorobenzene.

The reaction with the polyketone copolymer is suitably conducted under conditions of elevated temperature and sufficient pressure to maintain the reaction mixture substantially in a non-gaseous phase. Reaction is suitably conducted in a pressure vessel or autoclave at elevated temperature and pressure but is most easily conducted under reflux at the boiling temperature of the reaction mixture. The derivative is typically obtained as an insoluble polymer which is separated from any unreacted copolymer by extraction with a solvent in which the polymeric derivative is soluble but the original polymer is not. In the modifications where the derivative is soluble in the reaction diluent, recovery is effected by diluent removal as by evaporation followed by a selective extraction of the desired polymeric derivative.

The product of the invention is illustratively formed by condensation of the 1,2-vic hydroxy groups or the amino moiety with two adjacent carbonyl groups of the copolymer to produce a dioxolane or pyrrole ring. Statistically, there will be carbonyl moieties of the copolymer reactant which are unable to condense because of the removal of adjacent carbonyl groups through earlier reaction. Thus, the polypyridine will retain a certain proportion of the carbonyl-containing moieties of the

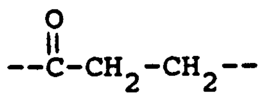

structure remaining from the polyketone copolymer reactant in addition to the substituted dioxolane or pyrrole groups. In contrast with earlier polymers of this type, however, the process of the invention results in the conversion of a high percentage of the carbonyl groups of the copolymer to produce either polypyridine polymers having a preponderance of moieties of the pyridine-substituted pyrrole type over the carbonyl-containing moieties, frequently at least a 5:1 preponderance, especially a ratio of b:a of at least 7, or producing polydioxolane polymers having a ratio of c:b of at least 2 and preferably at least 8. Conversion of carbonyl groups is typically over 85%, frequently over 90%.

The polypyridines and polydioxolanes of the invention are structurally related to the classes of poly(vinyl pyridines) and poly(vinyl acetals), respectively, which are commercial materials with known utilities and share those utilities. Particular applications for the polypyridines result from conventional processing of the polypyridines into thin sheets or membranes which are useful in water treatment or gas separations due to the property of the membranes of allowing selective passage of materials through the pores of the membrane. The polypyridines may also be further modified, for example by alkylation of the nitrogen of the pyridine ring to prepare cation exchange resins useful in the purification of water. The polydioxolanes may serve as adhesives for metal and for glass including the production of glass laminates such as safety automobile glass. They may be processed by usual techniques such as extruding, moulding and coating.

The invention is further illustrated by the following Examples.

EXAMPLE 1

(a) A copolymer of carbon monoxide and ethene was produced by a process substantially like that of EP-181,014 in the presence of a catalyst composition formed from palladium acetate, the anion of trifluoroacetic acid and 1,3-bis(diphenylphosphino)propane. The copolymer had a melting point of 257 °C and a Limiting Viscosity Number (LVN) of 1.1, measured in m-cresol at 100 °C.

(b) The copolymer of paragraph (a) (5g) was treated with a molar excess (23.3g) of 4-aminomethylpyridine in a 50/50 mixture (by volume) of toluene and chlorobenzene. The mixture was refluxed for 5 hours and then stirred overnight to produce a red brown polymer. The red brown polymer, recovered by filtration, was hard but readily soluble in chloroform. NMR analysis of the polymer indicated that approximately 93% of the carbonyl groups had reacted to produce a polypyridine of the following random structure.

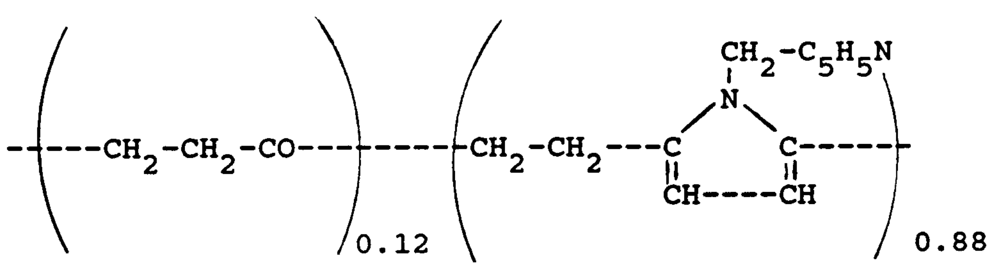

The presence of residual carbonyl is considered to be the statistical consequence of random condensation of the amine with a 1,4-diketone structure.

c) When the procedure of paragraph (b) was repeated except that the reaction diluent was xylene, a good yield of the polymer polypyridine was obtained.

EXAMPLE 2

The copolymer of Example 1(a) (5g) was treated with a molar excess of ethylene glycol (12g) and a trace of p-toluenesulfonic acid in refluxing toluene overnight. The resulting reaction product was fractionated with toluene into a first portion, about 33% by weight, which was gel and a second portion which was a toluene soluble polymer. The toluene soluble fraction was recovered by evaporation of the toluene. The polymer was partially crystalline with a melting point of 153 °C and a heat of melting of 9.7 cal/g. NMR analysis of the polymer showed that 96% of the carbonyl groups were converted to 1,3-dioxolane structures and the remaining carbonyl groups dehydrated to form furan ring systems. This polymer is therefore represented by the formula

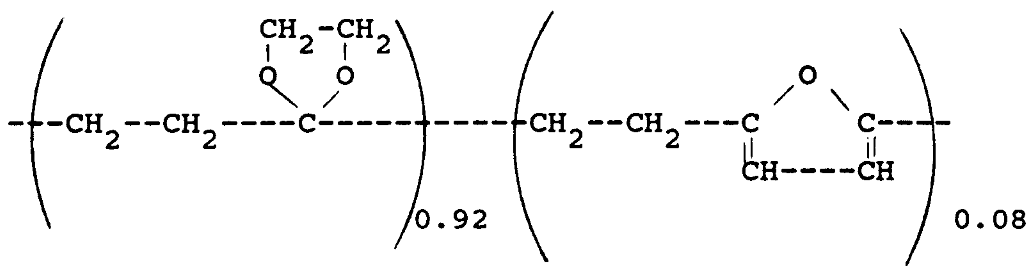

EXAMPLE 3

The procedure of Example 2 was repeated except that a 95:5 mixture (by weight) of ethylene glycol and glycerol was employed in place of the ethylene glycol. The resulting reaction product was completely insoluble in toluene but dissolved slowly in chloroform, chlorobenzene and hexaflurorisopropanol. The NMR of the polymer showed a random distribution in the polymer of

59% 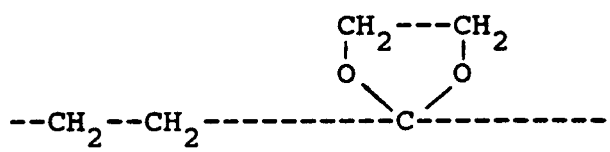 groups

3% 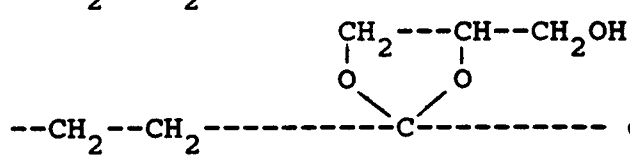 groups

27% 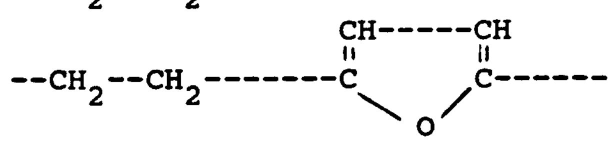 groups and

1% 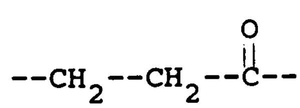 groups,

the latter apparently representing unreacted carbonyl groups.

**Claims**

1. Polymeric polyketone derivative, characterised by a random distribution along the polymer chain of a units of

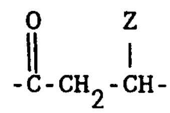
,

b units of

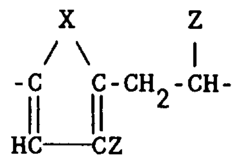
,

and c units of

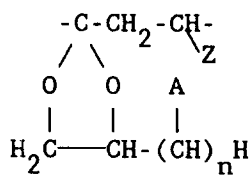
,

and by being free of units

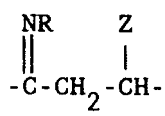
,

in which formulae:
A stands for H or OH;
R stands for a group of formula

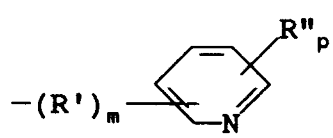

in which R' is a hydrocarbyl bridging group of up to 10 carbon atoms, m is 0 or 1, p is 0, 1 or 2, and each R'' is independently a hydrocarbyl group of up to 10 carbon atoms;
X represents O or NR;
Z represents H or a $C_{1-12}$ alkyl, aryl or alkaryl group;
n is an integer from 0 to 4 inclusive;
a and c are integers $\geqq 0$, and
b is an integer $> 0$;
with the provisos, that no more than one A can be OH; that if X stands for an oxygen atom, the ratio $a : (a+b+c) < 0.33$ and the ratio $c : b \geqq 2$; and that if X stands for the group NR, $c = 0$ and $a : b \leqq 0.2$.

**2.** A polyketone derivative as claimed in claim 1, characterised in that Z stands for a hydrogen atom.

**3.** A polyketone derivative as claimed in claim 2, characterised in that the ratio $a : (a+b+c) < 0.05$.

**4.** A polyketone derivative as claimed in claim 3, characterised in that the ratio $a : (a+b+c) < 0.02$, $n = 0$, X stands for oxygen and the ratio $c : b \geqq 8$.

**5.** A polyketone derivative as claimed in claim 1, characterised in that p = 0.

**6.** A polyketone derivative as claimed in claim 5, characterised in that the ratio of b : a ≧ 7.

**7.** A polyketone derivative as claimed in claim 5 or 6, characterised in that m = 0 and R stands for a 4-pyridyl group.

**8.** A polyketone derivative as claimed in claim 5 or 6, characterised in that m = 1, R' represents $-CH_2-$ and R stands for a 4-pyridylmethyl group.

**9.** Process for the preparation of a polymeric polyketone derivative as claimed in any of claims 1-8, characterised in that a linear alternating polymer of carbon monoxide and an olefinically unsaturated compound of repeating formula $-CO-CH_2-CHZ-$ is reacted with an amino compound of formula $H_2NR$ and/or a 1,2-dihydroxyalkane of formula

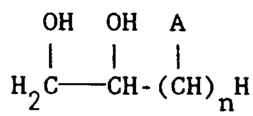

where A, R, Z and n have the meanings defined in claim 1.

**10.** A process as claimed in claim 9, characterised in that a linear alternating polymer of carbon monoxide and ethene is reacted with an amino(alkyl)pyridine of formula $H_2NR$, in an aprotic-reaction diluent, where R has the meaning defined in claim 1.

**11.** A process as claimed in claim 9 or 10, characterised in that the reaction is carried out in an aprotic reaction diluent selected from xylene, toluene and chlorobenzene.

**12.** Polymeric polyketone derivatives characterised by being obtainable by reacting at least two thirds of the ketone groups in a linear alternating polymer of carbon monoxide and an olefinically unsaturated compound of repeating formula $-CO-CH_2-CHZ-$ with an amino compound of formula $H_2NR$ and/or a 1,2-dihydroxyalkane of formula

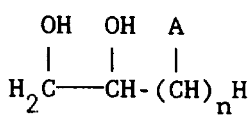
,

where A, R, Z and n have the meanings defined in claim 1.

**Patentansprüche**

**1.** Polymere Polyketonderivate, gekennzeichnet durch eine statistische Verteilung entlang der Polymerkette von a Einheiten aus

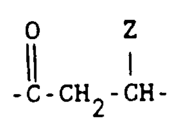
,

b Einheiten aus

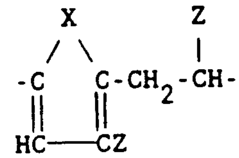

und c Einheiten aus

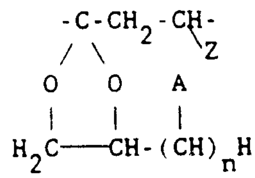

und frei von Einheiten aus

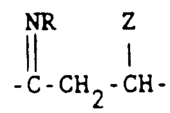 ,

wobei in den Formeln
A für H oder OH steht,
R für eine Gruppe der Formel

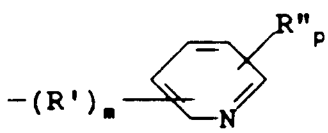

worin R' eine Hydrocarbyl-Brückengruppe mit bis zu 10 Kohlenstoffatomen, m 0 oder 1, p 0, 1 oder 2 und R'' jeweils unabhängig eine Hydrocarbylgruppe mit bis zu 10 Kohlenstoffatomen bedeuten,
X O oder NR,
Z H oder eine $C_{1-12}$-Alkyl-, Aryl- oder Alkarylgruppe darstellen,
n eine ganze Zahl von 0 bis einschließlich 4,
a und c ganze Zahlen ≧ 0 und
b eine ganze Zahl > 0 bedeuten,
mit den Maßgaben, daß nicht mehr als ein A OH bedeuten kann, daß bei X gleich einem Sauerstoffatom das Verhältnis von a : (a + b + c) < 0,33 und das Verhältnis von c : b ≧ 2 ist und daß bei X gleich einer Gruppe NR c = 0 und a : b ≦ 0,2 sind.

**2.** Polyketonderivate nach Anspruch 1, dadurch gekennzeichnet, daß Z für ein Wasserstoffatom steht.

**3.** Polyketonderivate nach Anspruch 2, dadurch gekennzeichnet, daß das Verhältnis von a : (a + b + c) < 0,05 ist.

**4.** Polyketonderivate nach Anspruch 3, dadurch gekennzeichnet, daß das Verhältnis von a : (a + b + c) < 0,02 ist, n = 0 ist, X für Sauerstoff steht und das Verhältnis von c : b ≧ 8 ist.

**5.** Polyketonderivate nach Anspruch 1, dadurch gekennzeichnet, daß p = 0 ist.

**6.** Polyketonderivate nach Anspruch 5, dadurch gekennzeichnet, daß das Verhältnis von b : a ≧ 7 ist.

7. Polyketonderivate nach Anspruch 5 oder 6, dadurch gekennzeichnet, daß m = 0 ist und R für eine 4-Pyridylgruppe steht.

8. Polyketonderivate nach Anspruch 5 oder 6, dadurch gekennzeichnet, daß m = 1 ist, R' $-CH_2-$ darstellt und R für eine 4-Pyridylmethylgruppe steht.

9. Verfahren zur Herstellung polymerer Polyketonderivate nach einem der Ansprüche 1-8, dadurch gekennzeichnet, daß man ein lineares alternierendes Polymer aus Kohlenmonoxid und einer olefinisch ungesättigten Verbindung der sich wiederholenden Formel $-CO-CH_2-CHZ-$ mit einer Aminoverbindung der Formel $RNH_2$ und/oder einem 1,2-Dihydroxyalkan der Formel

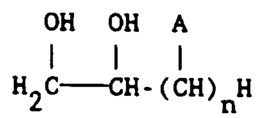

,

worin A, R, Z und n die in Anspruch 1 angegebene Bedeutung aufweisen, umsetzt.

10. Verfahren nach Anspruch 9, dadurch gekennzeichnet, daß man ein lineares alternierendes Polymer aus Kohlenmonoxid und Ethen mit einem Amino(alkyl)pyridin der Formel $RNH_2$, worin R die in Anspruch 1 angegebene Bedeutung aufweist, in einem aprotischen Reaktionsverdünnungsmittel umsetzt.

11. Verfahren nach Anspruch 9 oder 10, dadurch gekennzeichnet, daß die Umsetzung in einem aprotischen Reaktionsverdünnungsmittel, ausgewählt aus Xylol, Toluol und Chlorbenzol erfolgt.

12. Polymere Polyketonderivate, dadurch gekennzeichnet, daß sie durch Umsetzung von mindestens zwei Dritteln der Ketongruppen in einem linearen alternierenden Polymer aus Kohlenmonoxid und einer olefinisch ungesättigten Verbindung der sich wiederholenden Formel $-CO-CH_2-CHZ-$ mit einer Aminoverbindung der Formel $RNH_2$ und/oder einem 1,2-Dihydroxyalkan der Formel

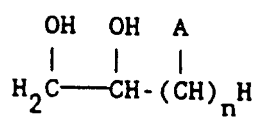

worin A, R, Z und n die in Anspruch 1 angegebene Bedeutung aufweisen,
erhältlich sind.

## Revendications

1. Dérivé polymère de polycétone, caractérisé par une distribution aléatoire le long de la chaîne polymère de a motifs de

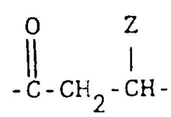

b motifs de

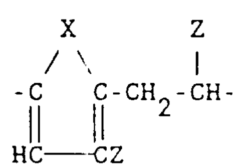

et c motifs de

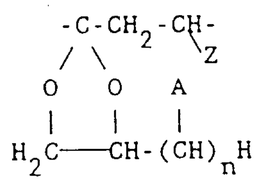

et qui est exempt de motifs

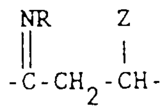

formules dans lesquelles :

A représente H ou OH ;

R représente un groupe de formule

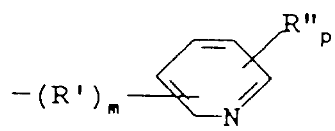

dans laquelle R' représente un groupe pontant hydrocarbyle ayant jusqu'à 10 atomes de carbone, m vaut 0 ou 1, p vaut 0, 1 ou 2 et chaque R'' représente indépendamment un groupe hydrocarbyle ayant jusqu'à 10 atomes de carbone ;

X représente O ou NR;

Z représente H ou un groupe alkyle en $C_{1-12}$, aryle, ou alkaryle ;

n est un nombre entier valant de 0 à 4, bornes incluses ;

a et c sont des nombres entiers ≧ 0 ; et

b est un nombre entier > 0 ;

sous réserve que, pas plus d'un A ne soit OH ; si X représente un atome d'oxygène, le rapport a : (a + b + c) < 0,33 et le rapport c : b ≧ 2 ; et si X représente le groupe NR, c = 0 et a : b ≦ 0,2.

**2.** Dérivé de polycétone selon la revendication 1, caractérisé en ce que Z représente un atome d'hydrogène.

**3.** Dérivé de polycétone selon la revendication 2, caractérisé en ce que le rapport a : (a + b + c) < 0,05.

**4.** Dérive de polycétone selon la revendication 3, caractérisé en ce que le rapport a : (a + b + c) < 0,02, n = 0, X représente un atome d'oxygène et le rapport c : b ≧ 8.

**5.** Dérive de polycétone selon la revendication 1, caractérisé en ce que p = 0.

**6.** Dérive de polycétone selon la revendication 5, caractérisé en ce que le rapport de b : a ≧ 7.

**7.** Dérive de polycétone selon la revendication 5 ou 6, caractérisé en ce que m = 0 et R représente un groupe 4-pyridyle.

**8.** Dérive de polycétone selon la revendication 5 ou 6, caractérisé en ce que m = 1, R' représente $-CH_2-$ et R représente un groupe 4-pyridylméthyle.

**9.** Procédé pour la préparation d'un dérivé polymère de polycétone selon l'une quelconque des revendications 1-8, caractérisé en ce que l'on fait réagir un polymère linéaire alterné de monoxyde de carbone et d'un composé à insaturation oléfinique de formule structurale $-CO-CH_2-CHZ-$, avec un composé

amino de formule $H_2NR$ et/ou un 1,2-dihydroxyalcane de formule

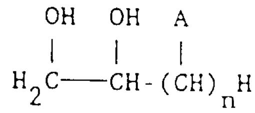

dans laquelle A, R, Z et n ont les significations données dans la revendications 1.

**10.** Procédé selon la revendication 9, caractérisé en ce que l'on fait réagir un polymère linéaire alterné de monoxyde de carbone et d'éthène, avec une amino(alkyl)pyridine de formule $H_2NR$, dans un diluant de réaction aprotique, où R a la signification donnée dans la revendication 1.

**11.** Procédé selon la revendication 9 ou 10, caractérisé en ce que la réaction s'effectue dans un diluant de réaction aprotique choisi parmi le xylène, le toluène et le chlorobenzène.

**12.** Dérives polymères de polycétones caractérisés en ce qu'on les obtient grâce à la réaction d'au moins deux tiers des groupes cétoniques dans un polymère linéaire alterné de monoxyde de carbone et d'un composé à insaturation oléfinique de formule structurale $-CO-CH_2-CHZ$, avec un composé amino de formule $H_2NR$ et/ou un 1,2-dihydroxyalcane de formule

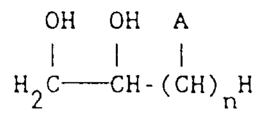

dans laquelle A, R, Z et n ont les significations données dans la revendication 1.